# EUROPÄISCHE PATENTSCHRIFT

(11) **EP 1 231 167 B1**
(45) Veröffentlichungstag und Bekanntmachung des Hinweises auf die Patenterteilung: **18.08.2004**
(21) Anmeldenummer: 02405014.8
(22) Anmeldetag: 14.01.2002
(51) Int. Cl.: B65G 25/02, B65G 47/14, B65B 35/20, B65B 59/00

(54) **Abfüllmaschine mit einer Vereinzelungsvorrichtung und einer Transportvorrichtung**
Filling machine provided with a separating device and a transport device
Machine de remplissage munie d'un dispositif de séparation et d'un dispositif de transport

(30) Priorität: 10.02.2001 CH 2422001
(43) Veröffentlichungstag der Anmeldung: 14.08.2002
(73) Patentinhaber: Haefelfinger, Roslind, 4058 Basel (CH)
(72) Erfinder: Wohnlich, Peter, 8475 Ossingen (CH)
(74) Vertreter: Patentanwälte Feldmann & Partner AG

(56) Entgegenhaltungen:
- GB-A- 689 478
- US-A- 3 757 961
- US-A- 3 841 468
- US-A- 3 908 860
- US-A- 3 939 992

## Beschreibung

Die vorliegende Erfindung betrifft eine Abfüllmaschine umfassend Vorrichtungen zum Separieren und Transport von zu befüllenden Gebinden nach dem Oberbegriff des Patentansprüchs 1 und ein Verfahren zum Gebindetransport beim Abfülle in einer derartigen Abfüllmaschine.

Aus der US-A-3,908,860 ist eine Zuführ- und Transportvorrichtung bekannt, bei der ein drehbeweglicher Konus an seiner Mittelachse angetrieben wird und von einer Zuführwand umgeben ist. Die zu transportierenden Gebinde werden vom sich drehenden Konus, dessen Mittelachse zusätzlich geneigt ist, gegen die Zuführwand bewegt und auf eine Rampe geschoben. Von dieser fallen die Gebinde einzeln oder in Gruppen in die Transportvorrichtung, welche sich linear und tangential zum Konus erstreckt. Die Transportvorrichtung umfasst zwei gegenläufig angetriebene parallele Rollen, welche stufenlos zueinander beabstandet werden können, und die Gebinde weitertransportieren. Die Rollen sind ebenso wie der Konus geneigt angeordnet. Ein taktweiser positionsgenauer Transport der Gebinde ist durch die Vorrichtung der D1 nicht ermöglicht.

Halb- und vollautomatische Abfüllmaschinen für kleinere Serien zum Abfüllen von bis zu 2000 Gebinden sind auf dem Markt erhältlich und werden vor allem für kleinere und mittlere Serien, zum Beispiel von Lohnabpackern, verwendet. Je nach Abfüllsystem können Füllgüter verschiedener Konsistenz und Art, von flüssig bis pastös (niedrig bis hochviskos), pulverförmig, granulär oder stückig (z.B. Pillen und Tabletten) abgefüllt werden. Die Volumen und Form der zu befüllenden Gebinde variieren ebenfalls sehr stark.

Ein Nachteil der derzeit bekannten Abfüllautomaten liegt in den langen Ausfallzeiten bei einem Produkte- und/oder Formatwechsel. Das komplizierte und zeitraubende Umrüsten von bei einem Wechsel ist nicht nur kostenintensiv, sondern stellt auch hohe Anforderungen an das Personal, das die Umrüstung vorzunehmen hat. Hier liegt eine Fehlerquelle, welche sich in nachfolgenden Produktionsunterbrüchen und zusätzlichen Ausfallzeiten niederschlägt.

Es ist daher Aufgabe der vorliegenden Erfindung eine Vorrichtung und ein Verfahren zur Verfügung zu stellen, welche die oben genannten Nachteile nicht aufweisen.

Eine weitere Aufgabe der Erfindung ist es eine Abfüllmaschine zur Verfügung zu stellen, welche sich mit wenigen Handgriffen innerhalb kürzester Zeit auf andere Gebindegrössen und -formen umrüsten lässt, wobei falsche Einstellungen an der Maschine weitgehend ausgeschlossen sind.

Diese Aufgabe wird durch eine Vorrichtung und ein Verfahren gemäss der Ansprüche 1 und 13 gelöst.

Weitere Ausführungsvarianten ergeben sich aus den abhängigen Ansprüchen.

In den Zeichnungen verschiedene Ausführungsbeispiele des Erfindungsgegenstandes dargestellt und in der nachfolgenden Beschreibung erläutert. Es zeigt:
- Figur 1: eine schematische Darstellung der erfindungsgemässen Abfüllvorrichtung gemäss einer ersten Ausführungsform in einer Draufsicht;
- Figur 2: eine Vorderansicht einer Vorrichtung gemäss Figur 1;
- Figur 3: Abfüllvorrichtung gemäss Figur 1 in Draufsicht, wobei ohne Abfüllstation zur Verdeutlichung des Gebindeflusses;
- Figur 4: eine Ansicht einer weiteren Ausführungsform mit Drehteller, Vereinzelungsstation und Transportvorrichtung, wobei Tragstrukturen und Arbeitsstationen weggelassen sind; und
- Figur 5: eine schematische Darstellung der Vereinzelung der zu befüllenden Gebinde und deren Weitergabe an die Transportvorrichtung.
- Figur 6: zeigt eine ausgebaute Vereinzelungsstation, und
- Figur 7: eine ausgebaute Transportvorrichtung.
- Figur 8: zeigt anhand einer Detailvergrösserung von Figur 7 den Bewegungsablauf der Transportvorrichtung.

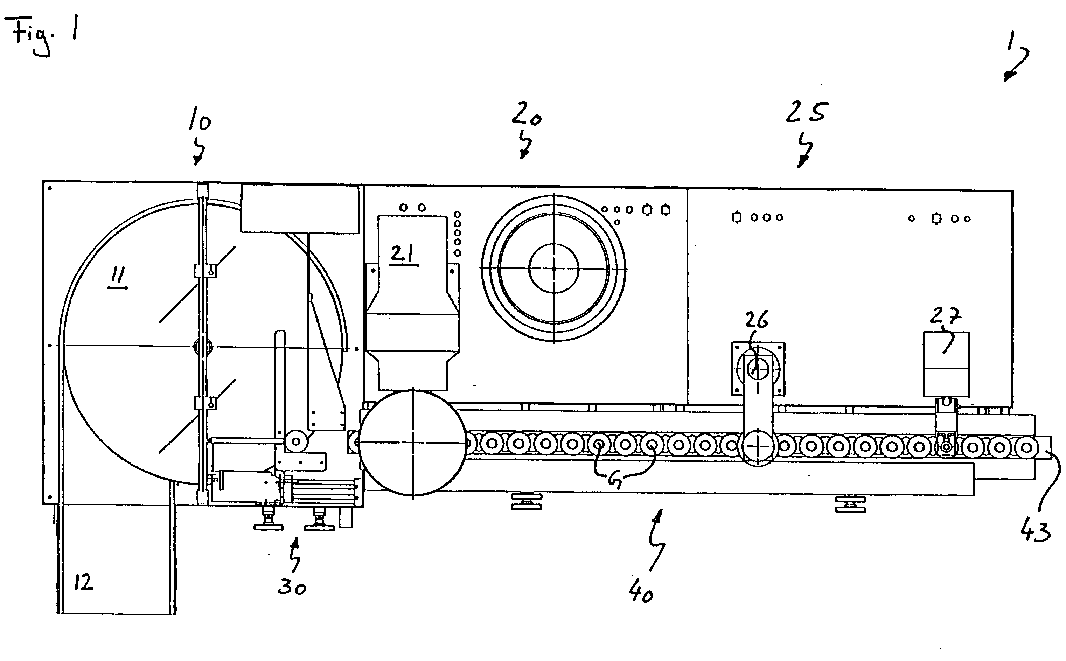

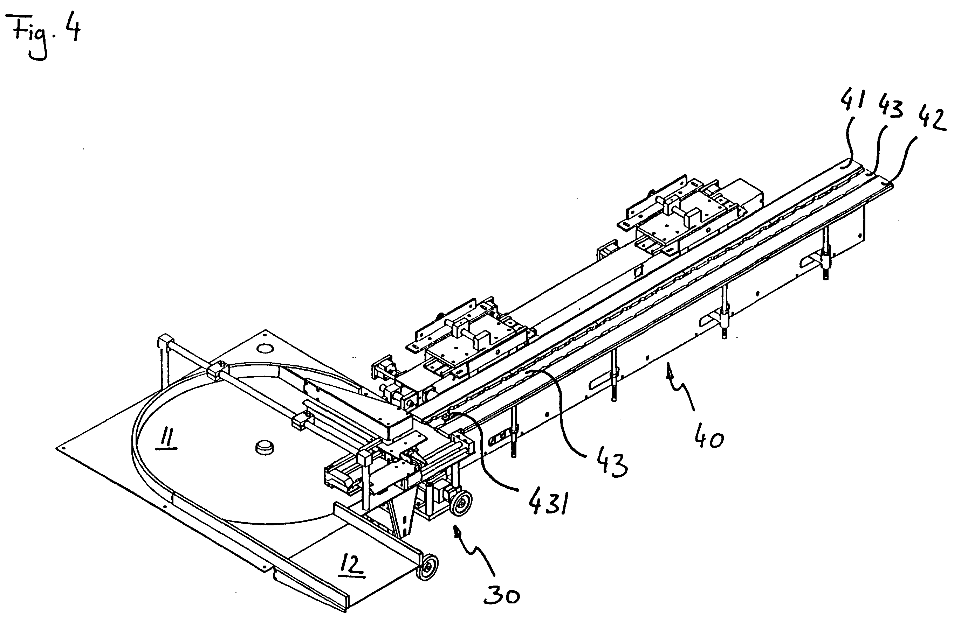

Anhand der in den Figuren 1 bis 8 schematisch dargestellten Vorrichtung zum automatischen Befüllen von Gebinden sollen im folgenden die erfindungswesentlichen Merkmale der Verpackungsmaschine und das erfindungsgemässe Verfahren erläutert werden.

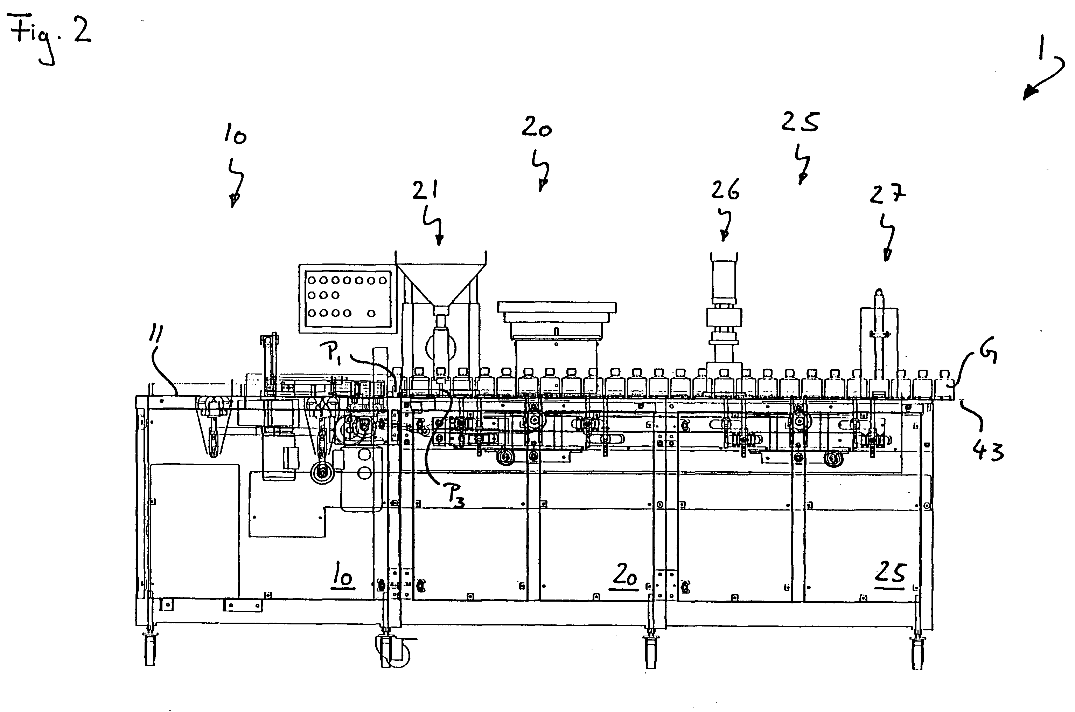

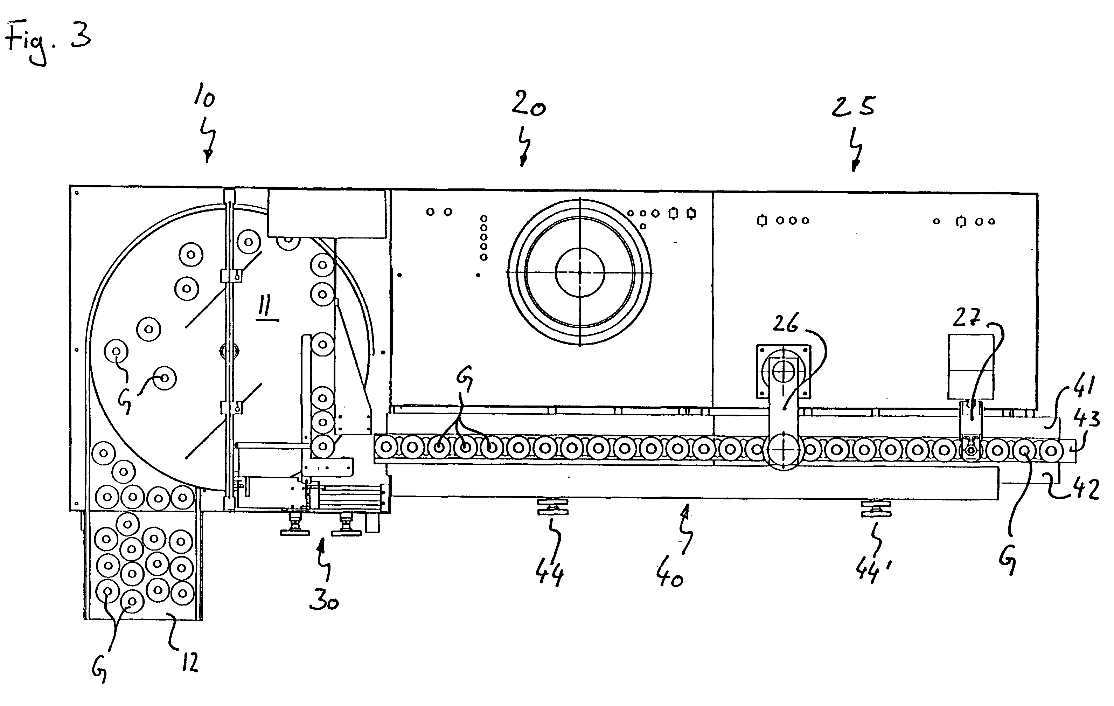

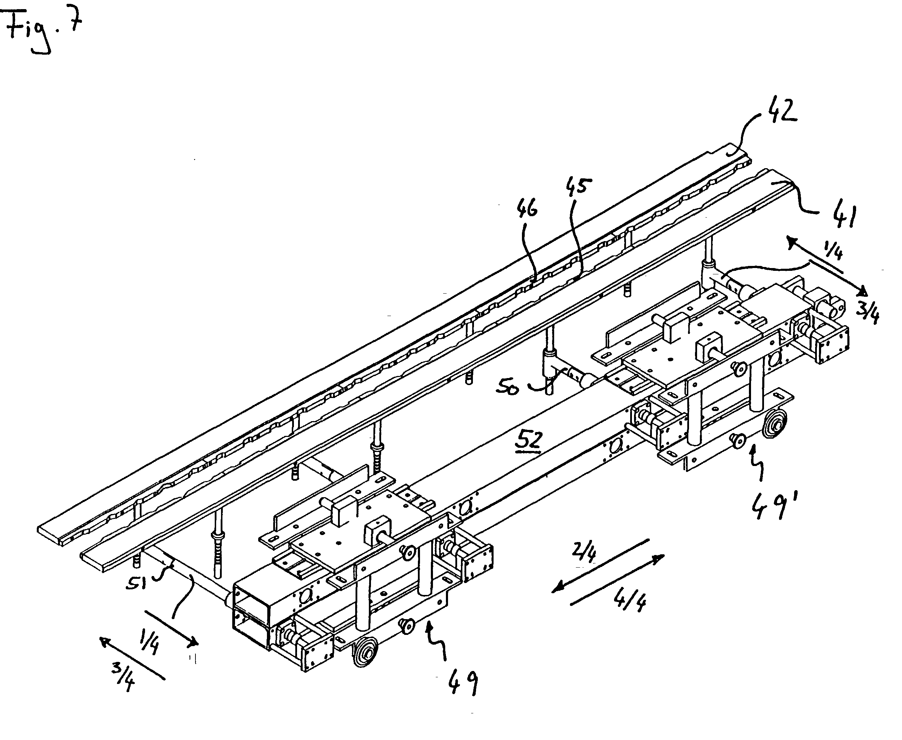

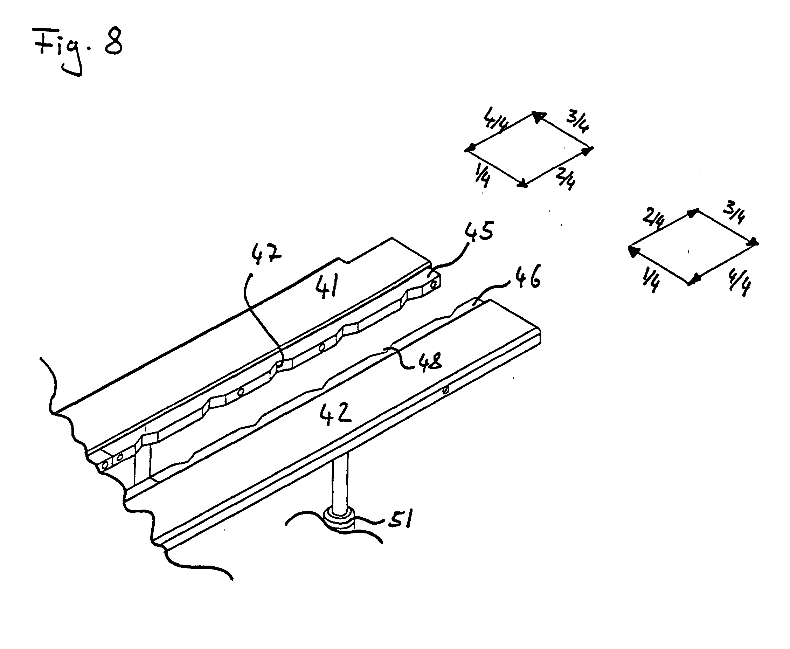

Die Draufsichten auf eine Ausführungsform der Erfindung gemäss der Figuren 1 und 3 verdeutlichen sowohl den prinzipiellen, modularen Aufbau einer Abfüllvorrichtung 1 wie auch den Ablauf des Verfahrens. Der modulare Aufbau der Maschine 1 ist deutlich sichtbar. Im dargestellten Beispiel ist von links nach rechts ein Drehtellermodul 10, daran angeschlossen ein Modul 20 mit einer Befüllvorrichtung 21 und daran angeschlossen ein weiteres Modul 25 mit einer Versiegelungsstation 26 und einer Verschraubstation 27, dargestellt. Der Produktefluss ist besonders gut in der Draufsicht gemäss der Figur 3 erkennbar, bei der die Befüllvorrichtung 21 nicht eingezeichnet ist. Von einem Drehteller 11, welcher im dargestellten Beispiel im Uhrzeigersinn dreht, werden die Gebinde G, im folgenden werden der Einfachheit halber immer zu befüllende Flaschen dargestellt sein, in eine Vereinzelungsstation 30 gefördert. Von der Vereinzelungsstation 30 wird eine lineare Transporteinheit 40 mit einzelnen, zu befüllenden Gebinden G gespeist. Die Länge der Transporteinheit 40 ist auf die Anzahl der Arbeitsstationen 21, 26, 27, respektive auf die Anzahl der diese tragenden Module 20, 25 angepasst. Grundsätzlich können beliebig viele Module aneinander gekoppelt werden, und die Transportvorrichtung 40 wird analog dazu ebenfalls modular verlängert.
Die zu befüllenden Gebinde G befinden sich während des gesamten Arbeitsvorganges immer in aufrechter Stellung in einer annähernd horizontalen Ebene, welche durch die Oberfläche des planen Drehtellers 11 und eines Auflagebleches 43 der Transportvorrichtung 40 vorgegeben ist. Aus der Figur 2 wird dies deutlich. Jedes Basismodul 20, 25 kann eine oder mehrere Bearbeitungsstationen 21, 26, 27 tragen. Die Arbeitsoberflächen der Basismodule 20, 25 sind so ausgefomt, dass verschiedenste Bearbeitungsstationen positionsgenau lösbar befestigbar sind. Die Position der Arbeitsstationen folgt einem Raster, welches durch die Transportvorrichtung 40 vorgegeben ist. Der erfindungsgemässe lineare Transport erfolgt taktweise, wie im weiteren noch ausführlicher beschrieben wird. Die Bearbeitungsstationen 21, 26, 27 sind so angeordnet, dass sie mit einer jeweiligen Ruheposition eines Gebindes in der Transportvorrichtung 40 korrespondieren. In einer solchen Ruheposition befindet sich also ein zu befüllendes Gebinde G unter der Abfüllstation 21, wo es befüllt wird, ein gefülltes Gebinde befindet sich genau unter der Heiss-Siegelstation, unter der der Flaschenhals mit Folie versiegelt wird, und eine gefüllte versiegelte Flasche befindet sich genau unter einem Schraubkopf der einen Deckel aufdreht. Am Ende der Transportvorrichtung werden die befüllten Flaschen zum Beispiel an eine hier nicht dargestellte Packstation abgegeben. Die Transportgeschwindigkeit wird durch den langsamsten der Arbeitsschritte limitiert. Sind alle Arbeitsschritte ausgeführt können die Gebinde einen Schritt weiter in die jeweils nächste Position gefördert werden. Obwohl die lineare Transportvorrichtung in zeitlicher Hinsicht erst nach Drehteller und Vereinzelungsstation durchlaufen wird, sollen in der vorliegenden Beschreibung erst der Aufbau und die Funktion der Transportvorrichtung 40 genauer betrachtet werden.
Der prinzipielle Bewegungsablauf der Transportvorrichtung ist in der Figur 8 dargestellt. Zwei parallele Rechen sind entlang des linearen Transportweges parallel zueinander angeordnet. Die Rechen umfassen in einer bevorzugten Ausführungsform mindestens je eine Basisschiene 41, 42 und mindestens je ein, in der jeweiligen Schiene einsteckbares, Halteprofil 45, 46. Die Halteprofile der Ausführungsform gemäss Figur 8 weisen an den einander zugewandten Seitenflächen in regelmässigen Abständen Ausnehmungen 47, 48 mit backenförmigen Spannflächen auf, zwischen welchen die Gebinde beim Transport und in den Ruhepositionen kraftschlüssig und mehr oder weniger formschlüssig gehalten werden. Die Bewegungsabläufe der Rechen sind synchron aber spiegelbildlich zueinander. Die beiden Bewegungsdiagramme der Figur 8 sollen den Bewegungsablauf veranschaulichen und sie zeigen auch, dass die Rechen im wesentlichen in nur einer Ebene bewegt werden. In einem ersten Schritt 1/4 Fahren die Rechen soweit aufeinander zu, dass die Gebinde, welche sich in einer ersten Ruheposition befinden fest zwischen den Haltebacken 47, 48 gehalten werden. Als nächstes folgt der lineare Transportschritt 2/4, der die Gebinde in eine zweite Ruheposition bringt. Ein Arbeitstakt kann ablaufen, während die Gebinde von den Rechen genau positioniert und gleichzeitig sicher gehalten sind. Sind die Befüllung, Versiegelung und Deckelung abgeschlossen so werden die Gebinde von den auseinanderfahrenden Rechen im Schritt 3/4 freigegeben. Die Gebinde G stehen in der zweiten Ruhepositon auf dem Auflageblech 43, während die Rechen im vierten Schritt 4/4 in ihre ursprüngliche Position zurückbewegt werden. Während sich die Rechen wieder in der Ausgangsposition befinden, ist die Reihe von - hier nicht dargestellten Flaschen um eine Position nach rechts verschoben worden. Ein ausgebautes Transportmodul 40 ist in der Figur 7 dargestellt. Die Antriebs- und Steuereinheiten 49, 49' sind im eingebauten Zustand im Korpus des jeweiligen Maschinenmoduls untergebracht und vor Verschmutzungen und Beschädigungen gesichert. Die Rechen 41, 42 werden über Antriebsgestänge 50, 51 von jeweils einer Antriebsund Steuereinheit 49, 49' bewegt. Im dargestellten Ausführungsbeispiel sind die gleichgerichteten Lateralbewegungen 2/4 und 4/4 der Rechen durch die gleitbewegliche Montage der Tragschiene 52 am Modulgrundkörper ermöglicht, wobei an der Tragschiene die Antriebs- und Steuereinheiten 49, 49' befestigt sind. Die gegenläufige Schliess- und Oeffnungsbewegung 1/4 und 3/4 der Rechen relativ zueinander wird durch die gleitbewegliche Lagerung der Steuerstangen 50, 51 in der Tragschiene 52 ermöglicht.
Über die Steuerstangen 50, 51 wird auch die Öffnungsweite der Rechen in Abhängigkeit von der Gebindegrösse eingestellt. Die synchrone Verstellung der Rechen zueinander über einen hier nur teilweise dargestellten Einstellmechanismus wird im folgenden noch genauer behandelt werden.
Der Arbeitshub 1/4 und 3/4 der Steuerstangen 50, 51 variiert in Abhängigkeit von der Gebindegrösse kaum

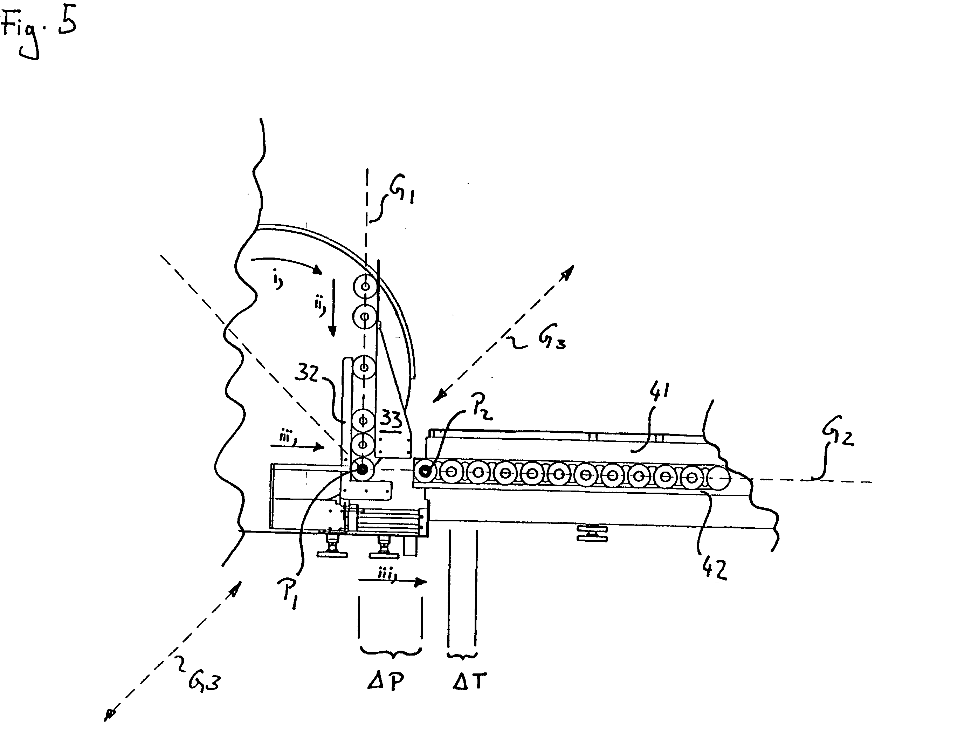

Aus den Figuren 3 und 5 wird deutlich, wie die lineare Transportvorrichtung von die Vereinzelungsstation mit Gebinden G gespeist wird.
Der im Uhrzeigersinn i) langsam drehende Drehteller 11 wird über einen vorgebauten Ladetisch 12 vorzugsweise manuell mit leeren Gebinden G gespeist. Staubleche 13, welche von oben her in die auf dem Drehteller 11 befindlichen Gebinde G eingreifen stellen sicher, dass die Gebinde in periphere Bereiche des Drehtellers 11 gefördert werden, und so der Vereinzelungsstation 30 zugeführt werden.

Die Vereinzelungsstation 30 definiert im Wesentlichen einen rechtwinklig abgewinkelten Gang oder Kanal, dessen Winkelhalbierende annähernd senkrecht zum Radius des Drehtellers liegt. Dadurch ist sichergestellt, dass die Gebinde vom Drehteller bis in eine Halteposition P₁ im Kniebereich der Vereinzelungsvorrichtung 30 gefördert werden (Bewegungsrichtung ii)). Aus dieser Halteposition P₁ wird das einzelne Gebinde von einem Stössel 31 weiter in Richtung iii) in eine allererste Ruheposition P₂ in der Transportvorrichtung geschoben. Transport- und Vereinzelungsvorrichtung sind so zueinander synchronisiert, dass die Bewegung iii) genau dann durchgeführt wird, wenn sich die Transportrechen in der oben beschriebenen offenen Stellung vor Beginn der Schliessbewegung 1/4 befinden. Schliessen sich sodann die Rechen, so wird das Gebinde in Position P2 von dem ersten Backenpaar erfasst und durch den Transportschritt 2/4 stromabwärts befördert. Ein wesentlicher Vorteil der vorliegenden Erfindung liegt darin, dass die Strecke ΔP, um welche das Gebinde vom Stössel verschoben wird, relativ unabhängig von der Grösse, das heisst vom Durchmesser, des Gebindes ist.
Der Kanal der Vereinzelungsvorrichtung wird im wesentlichen von zwei, L-förmigen Kanalwänden 31 und 32 definiert. Die Kanalwände sind relativ zueinander verschiebbar über dem Drehteller 11 angeordnet. Über einen mit einem Handrad 35 angetriebenen Verstellmechanismus lassen sich die Kanalwände synchron zusammen oder auseinanderbewegen, und so exakt auf den Durchmesser der zu befüllenden Gebinde einstellen. Der Verstellmechanismus ist derart ausgelegt, dass bei Drehen des Handrades die Kanalwände um den gleichen Weg von gedachten Geraden G₁ und G₂ weg oder zu diesen hin bewegt werden. Dadurch ist sichergestellt, dass die Breite des Kanals in beiden Schenkeln stets gleich ist. Bei einer Breite von null definieren die Kanalwände die Geraden G₁ und G₂ und der die Position P₁ ist gerade vom Kniepunkt vorgegeben. die Gerade G₂ definiert im dargestellten Beispiel ebenfalls die Richtung der Bewegung iii) des Stössels 31 und auch die Transportrichtung der Gebinde G in der Transportvorrichtung. Sowohl in der Vereinzelungsvorrichtung, wie auch in der Transportvorrichtung befinden sich also die Gebinde mit ihrem Mittelpunkt immer auf der Geraden G₁ oder G₂. Bei einem Gebindewechsel muss also lediglich ein neuer passender Abstand von den Kanalwänden 32, 33 zu den Referenzlinien G₁ und G₂ eingestellt werden, und analog der Abstand von den Halteprofilen 45, 46 zu G₂ angepasst werden. Während die Kanalwände gegenüber dem Gebinde etwas Luft haben sollen um auch bei Abweichungen im Gebindedurchmesser ein Steckenbleiben zu verhindern, wird der Abstand der Rechen zur G₂ eher kleiner gewählt, so dass bei geschlossenem Rechen die Gebinde mit genügend Kraft gehalten werden können.
Die Einstellungen über die Handräder sind dank Anzeigen an den Handrädern reproduzierbar.

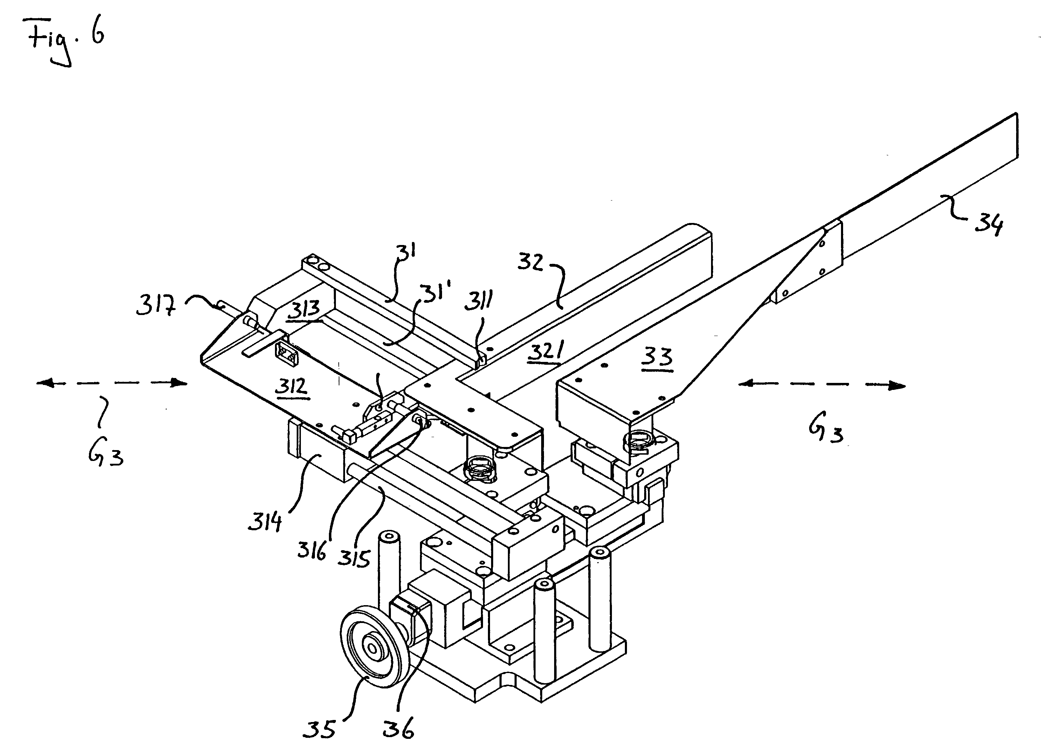

In der Figur 6 ist eine ausgebaute Vereinzelungsvorrichtung 30 dargestellt. Der Weg den der Stössel 31 beim Verschieben der Gebinde zurücklegt, ist wie bereits erwähnt unabhängig vom Gebindedurchmesser und entspricht in der Länge dem Weg ΔP.
Ein automatisch korrigierendes Anschlagsystem 35 stellt sicher, dass eine vordere Schubfläche 311 des Stössels in der Ruheposition annähernd in einer Ebene mit der Kanalinnenwand 321 zu liegen kommt, und zwar unabhängig von der eingestellten Kanalbreite. Der Stössel 31, welcher im dargestellten Beispiel einen unteren 31' und einen oberen Stössel 31 umfasst, ist über eine Tragplatte 312 und einen Tragarm 313 fest mit einem Schlittenzylinder 314 verbunden. Dieser ist wiederum in Richtung iii) hin- und herbeweglich verschiebbar auf einer oder mehreren Führungsstangen 315 gelagert. Der maximale Weg, welcher vom Schlitten 314 durchlaufen werden kann, ist in einer vorderen Position durch einen hinteren stossgedämpften Anschlag 317 und in einer hinteren Position durch einen vorderen Stossgedämpften Anschlag 316 begrenzt. Referenzpunkt, respektive Anschlagfläche bietet für beide Anschläge die Anschlagwand 322, welche sich in Richtung der Kanalinnenwand 321 erstreckt und fest mit der Kanalwand 32 verbunden ist. Im dargestellten Beispiel definieren die beiden Anschläge 316 und 317 eine Gerade, welche senkrecht die Anschlagwand 322 durchsetzt. Wird die Kanalbreite bei einem Gebindewechsel auf einen neuen Gebindedurchmesser eingestellt, so fährt der Schlitten 314 und damit auch der Stössel 31 pneumatisch, oder anderweitig kraftbeaufschlagt soweit nach hinten, bis der vordere Anschlag 316 an der Wand 322 ansteht. Dadurch ist sichergestellt, dass der Stössel in der hinteren Ruheposition nicht über die Innenwand 321 vorsteht und den Einlauf der Gebinde bis zur Position P₁ behindert. Beim Vereinzeln der Gebinde fährt der Stössel nach vorne, bis der hintere Anschlag 317 an der Wand 322 anschlägt. In dieser Position befindet sich das zu vereinzelnde Gebinde mit seinem Mittelpunkt genau in der Position P2 und kann von der Transportvorrichtung 40 übernommen werden. Beim zurückfahren gibt der Stössel das Kanalknie und damit die Position P1 für das nächstfolgende Gebinde frei.
Angetrieben vom Handrad 35 sind die beiden Kanalwände 32, 33 entlang einer Geraden auseinander und zusammenbewegbar.
Im vorliegenden Ausführungsbeispiel wird die Drehbewegung des Handrades über zwei rechtwinklig zueinander bewegbare Schlittensysteme in die Bewegung der Kanalwände 32, 33 entlang der G3 umgesetzt. Dies erlaubt eine sehr kompakte Bauweise der Verstelleinheit. Es ist natürlich auch möglich in anderen Ausführungsformen die Kanalwände durch eine Zug-/Schubspindel welche direkt entlang der G3 angeordnet ist zu verstellen.

Die erfindungsgemässe Verstellbarkeit von der Kanalwände 32, 33 und insbesondere der Rechen 41, 42 ermöglicht es unabhängig vom Gebindedurchmesser mit gleichbleibenden Referenzgeraden G₁ und G₂ und Referenzpunkten P₁ und P₂ zu arbeiten. Dies ist besonders vorteilhaft, da im bei einem Gebindewechsel die Arbeitsstationen 21, 26, 27 nicht in Ihrer Position verändert werden müssen. Durch die erfindungsgemässe Verstellbarkeit ist also sichergestellt, dass die Gebindemittelpunkte jeweils genau auf der G2 liegen. Durch die erfindungsgemässen Transportrechen ist sichergestellt, dass die lineare Position eines Gebindes entlang des Transportweges einem exakten regelmässigen Raster folgt. Die jeweilige Entfernung von P2 ist jeweils ein n-faches von ΔT. Alle möglichen Verweilpositionen entlang des Transportweges der Gebinde, respektive der Gebindemittelpunkte, sind also bekannt. Unabhängig vom Gebindedurchmesser kann also in von einer Befüllungsstation 21 jedes Gebinde befüllt werden, welches sich in der Position P3 befindet befüllt werden, wie dies in der Figur 2 angedeutet ist.

Die Maschine gemäss der oben besprochenen Ausführungsbeispiele lässt sich mit Abfülleinrichtungen für Füllmedien verschiedenster Aggregatzustände ausrüsten. In einer vorteilhaften Ausführungsform können runde Flaschen und Behälter mit einer Höhe von bis zu 200 mm und einem Durchmesser zwischen 20 bis 65 mm befüllt werden, ohne dass bei einem Wechsel auf ein anderes Flaschenformat ein einziges Teil an der Vereinzelungs- oder Transportvorrichtung ausgetauscht werden muss. Die Formatanpassung mittels der handradbetriebenen Verstellmechanismen erlaubt eine optimal kurze Umrüstzeit, und ist durch die Verstellanzeigen exakt reproduzierbar.
Sollen nicht-runde Gebinde abgefüllt werden, so lassen sich wie bereits oben erwähnt, angepasste Halteprofile 45, 46 in die Rechen 41, 42 einschieben, die Ausnehmungen 47, 48 aufweisen, welche der Gebindeform entsprechen. In einer vorteilhaften Ausführungsform sind die Halteprofile 45, 46 zweiseitig verwendbar. Während sie auf der einen Seite mit einer Anzahl einfacher V-förmiger Backenprofile zum Halten zylinderischer Gebinde versehen sind, weisen sie auf einer anderen Seite zum Beispiel prismenförmige Ausnehmungen zum Halten 6-eckiger Gebinde auf.

Der Unterbau der einzelnen Module 10, 20, 25 nimmt Antriebsund Steuereinheiten von Drehteller 11 und Vereinzelungsvorrichtung 30, respektive von linearer Transportvorrichtung 40 und - falls nötig - von den Arbeitsstationen 21, 26, 27 auf. Alle Module sind auf Rollen gelagert, so dass die äusserst kompakte Abfüllmaschine je nach Bedarf verschiebbar ist. Externe Zuleitungen sind nur zur Spannungsversorgung und eventuell zur Versorgung mit Druckluft nötig.

Die Abfüllmaschine 1 ist vorteilhafterweise in Balkonbauweise ausgeführt. Das heisst, wie in Figur 3 angedeutet, dass die Transportvorrichtung den kastenförmigen Modulkörpern 20, 25 balkonartig vorgelagert ist. Durch diese Bauweise sind alle Elemente der Transportvorrichtung gut zugänglich und im Falle einer Grösseren Verschmutzung mit Abfüllgut, ist sichergestellt, dass die Modulkörper nicht mit Abfüllgut verschmutzt werden. Sollte einmal ein bereits gefülltes Gebinde umkippen , so verhindern Auffangrinnen an beiden Seiten des Auflagebleches 431, dass das verschüttete Füllmaterial weitere Maschinenteile oder den Boden vor der Maschine kontaminiert. Durch ein Ablaufsieb 431 im Auflageblech 43 unter der Füllstation 21 kann verschüttetes oder überlaufendes Füllgut in einen darunterliegenden Auffangbehälter ablaufen.

Alle Teile der Abfüllmaschine, welche mit dem Füllgut in Berührung kommen können, sind steck- oder einschiebbar befestigt und dadurch schnell und einfach ohne Werkzeug ausbaubar. Alle diese Teile sind aus Metallen, vorzugsweise Edelstahl, oder Kunststoffen gefertigt, welche von den abzufüllenden Produkten nicht angegriffen werden. Werden schwer entfernbare Stoffe, wie zum Beispiel Klebstoffe abgefüllt, so können diese Teile vorteilhafterweise antihaftbeschichtet sein. In Verbindung mit den oben genannten konstruktiven Merkmalen verleiht dies der neuen Maschine hervorragende Reinigungseigenschaften. dieser Aspekt kommt vor allem dann zum Tragen, wenn die Maschine zum Abfüllen von pharmazeutischen Produkten oder von Lebensmitteln

Wie bereits eingangs erwähnt, liegt ein entscheidender Vorteil der Abfüllmaschine gemäss der vorliegenden Erfindung darin, dass sie sehr schnell und einfach auf verschiedenste Gebindedurchmesser eingestellt werden kann. Dank der steckbaren auswechselbaren Halteprofile in den Rechen kann aber auch sehr schnell von zylindrischen, auf zum Beispiel sechs- oder achteckige Gebinde umgestellt werden.

Durch das getaktete Ausschieben der Behältnisse in gerader Linie ist der Übergang auf eine nachgeschaltete, in den Figuren aber nicht dargestellte, Etikettier- oder Verpackungsanlage problemlos möglich.

## Patentansprüche

1. Abfüllmaschine (1) mit mindestens einer Vorrichtung zum Vereinzeln (30) und mindestens einer lineare Transportvorrichtung (40) zum Transport (40) von zu befüllenden Gebinden (G), welche stufenlos auf verschiedene Gebindedurchmesser einstellbar ist, **dadurch gekennzeichnet, dass** die Vereinzelungsvorrichtung (30) zwei L-förmige Kanalwände (31, 32) und Mittel zu deren Zusammen- und Auseinanderbewegen umfasst, so dass sie stufenlos auf verschiedene Gebindedurchmesser einstellbar ist.

2. Abfüllmaschine (1) gemäss Anspruch 1, **dadurch gekennzeichnet, dass** gegenüberliegende Kanalwände (32,33), welche einen Kanal für die zu vereinzelnden Gebinde in der Vereinzelungsvorrichtung (30) bilden, und gegenüberliegende Transportrechen (41, 42) der Transportvorrichtung (40) in Bezug auf eine Referenzgerade (G₂) synchron zusammen- und auseinanderbewegbar sind.

3. Abfüllmaschine (1) gemäss Anspruch 2, **dadurch gekennzeichnet, dass** die gegenüberliegenden Kanalwände (32,33) des L-förmigen Kanals entlang einer Geraden (G₃) gleichmässig auseinander- und zusammenbewegbar sind, wobei die Gerade (G₃) der Winkelhalbierenden durch den L-Winkel des Kanals der Vorrichtung (30) entspricht, so dass die Breite des Kanals in beiden Schenkeln der L-förmigen Vereinzelungsvorrichtung (30) identisch ist.

4. Abfüllmaschine (1) gemäss Anspruch 3, **dadurch gekennzeichnet, dass** der L-Winkel annähernd 90° beträgt.

5. Abfüllmaschine (1) mit einer Vereinzelungsvorrichtung (30) gemäss Anspruch 1, **dadurch gekennzeichnet, dass** ein Stössel (31) entlang der Referenzgeraden (G₂) um eine Strecke (ΔP) hin- und herbewegbar ist, und mit dem Stössel ein zu vereinzelndes Gebinde von einer Position (P1) im Kniebereich der Vereinzelungsvorrichtung (30) in eine Position (P2) im Anfangsbereich der Transportvorrichtung (30) bringbar ist.

6. Abfüllmaschine (1) gemäss Anspruch 5, **dadurch gekennzeichnet, dass** eine vordere Schubfläche (311) des Stössels (31) in einer hinteren Ruheposition des Stössels (31) annähernd in eine Ebene mit einer Kanalinnenwand (321) zu liegen kommt.

7. Abfüllmaschine (1) gemäss Anspruch 6, **dadurch gekennzeichnet, dass** eine hintere Anfangs- und eine vordere Endposition der Stösselbewegung durch das Zusammenwirken eines hinteren Anschlags (317) und eines vorderen Anschlags (316) mit einer Anschlagwand (322) definiert sind, wobei sich die Anschlagwand (322) in Richtung der Kanalinnenwand (321) erstreckt und fest mit der Kanalwand (32) verbunden ist.

8. Abfüllmaschine (1) gemäss Anspruch 7, **dadurch gekennzeichnet, dass** der Abstand zwischen dem hinteren Anschlag (317) und dem vorderen Anschlag (316) der Strecke (ΔP) des Stössels (31) entspricht.

9. Abfüllmaschine (1) gemäss Anspruch 7, **dadurch gekennzeichnet, dass** ein vorderer Anschlag (316) auf Höhe der Stösselspitze (311) an der Anschlagwand (322) auf Höhe der Innenwand (321) anliegt, wenn der Stössel (31) sich in einer hinteren Ruheposition befindet, so dass die vordere Schubfläche (311) des Stössels (31) annähernd bündig mit der einer Kanalinnenwand (321) zu liegen kommt.

10. Abfüllmaschine (1) gemäss Anspruch 1, **dadurch gekennzeichnet, dass** in der Transporvorrichtung (40) parallele Rechen (41, 42) gleichmässig beabstandet von einer Referenzgeraden (G₂) in einer gemeinsamen Ebene über einem Auflageblech (43) angeordnet sind, wobei die Rechen (41, 42) zwei Freiheitsgrade der Bewegung aufweisen.

11. Abfüllmaschine (1) gemäss Anspruch 10, **dadurch gekennzeichnet, dass** Halteprofile (45, 46) in die Rechen (41, 42) einschiebbar und lösbar befestigbar sind, welche Ausnehmungen (47, 48) aufweisen, welche zum form- und/oder kraftschlüssigen Halten der zu transportierenden Gebinde dienen.

12. Abfüllmaschine gemäss Anspruch 1, **dadurch gekennzeichnet, dass** die Arbeitsköpfe der Arbeitsstationen, (21, 26, 27) über der Transportvorrichtung entlang der Referenzgeraden (G₂) ausgerichtet sind.

13. Transportverfahren für abzufüllende Gebinde, wobei in einem ersten Schritt ein Gebinde (G) aus einer Halteposition (P₁) in einem Kniebereich einer Vereinzelungsvorichtung (30) einer Abfüllmaschine (1) gemäss einem der Anspruche 2, 3, 4, 10 oder 11 entlang einer Geraden (G₃) in eine Position (P₂) im Anfangsbereich der Transportvorrichtung (40) geschoben wird, wobei sich die Transportrechen (41, 42) in einer geöffneten Stellung befinden, so dass die Position (P₂) freigegeben ist.

14. Verfahren gemäss Anspruch 13, **dadurch gekennzeichnet, dass** jeder Transportschritt die Gebinde um eine definierte Strecke (ΔT) entlang der Geraden (G₃) fortbewegt.

15. Verfahren gemäss Anspruch 13, **dadurch gekennzeichnet, dass** jeder Transportschritt vier Takte umfasst, wobei
in einem ersten Takt (1/4) die Transportrechen aufeinander zu bewegt werden, bis sie die zu transportierenden Gebinde fest halten,
in einem zweiten Takt (2/4) die Rechen mit den Gebinden um die definierte Strecke (ΔT) lateral in Transportrichtung verschoben werden,
in einem dritten Takt (3/4) die Transportrechen auseinander bewegt werden, bis sie die Gebinde vollständig freigeben, und
in einem Vierten Schritt (4/4) die Rechen ohne Gebinde in die Ausgangsstellung zurückfahren.

16. Verfahren gemäss Anspruch 15, **dadurch gekennzeichnet, dass** die Transportschritte synchron mit den Vereinzelungsschritten getaktet sind.

## Claims

1. A filling machine (1) with at least one device for separating (30), and with at least one linear transport device (40) for the transport (40) of containers (G) to be filled which may be infinitely adjusted to various container diameters, **characterised in that** the separating device (30) comprises two L-shaped channel walls (31, 32) and means for moving them together and apart so that they may be infinitely adjusted to various container diameters.

2. A filling machine (1) according to claim 1, **characterised in that** oppositely lying channel walls (32, 33) which form a channel for the containers to be separated in the separating device (30), and oppositely lying transport racks (41, 42) of the transport device (40) may be moved synchronously together and apart with regard to a reference straight line (G₂).

3. A filling machine (1) according to claim 2, **characterised in that** the oppositely lying channel walls (32, 33) of the L-shaped channel may be moved uniformly apart and together along a straight line (G₃), wherein the straight line (G₃) corresponds to the angle bisecting line through the L-angle of the channel of the device (30) so that the width of the channel is identical in both limbs of the L-shaped separating device (30).

4. A filling machine (1) according to claim 3, **characterised in that** the L-angle is approximately 90°.

5. A filling machine (1) with a separating device (30) according to claim 1, **characterised in that** a plunger (31) may be moved to and from along the reference [straight] line (G₂) about a path (ΔP), and with the plunger a container to be separated may be brought from a position (P1) in the knee region of the separating device (30) into a position (P2) in the starting region of the transport device (30).

6. A filling machine (1) according to claim 5, **characterised in that** a front push surface (311) of the plunger (31) in a rear rest position of the plunger (31) comes to lie approximately in a plane with a channel inner wall (321).

7. A filling machine (1) according to claim 6, **characterised in that** a rear starting position and a front end position of the plunger movement is defined by the cooperation of a rear abutment (317) and a front abutment (316) with an abutment wall (322), wherein the abutment wall (322) extends in the direction of the channel inner wall (321) and is fixedly connected to the channel wall (32).

8. A filling machine (1) according to claim 7, **characterised in that** the distance between the rear abutment (317) and the front abutment (316) corresponds to the path (ΔP) of the plunger (31).

9. A filling machine (1) according to claim 7, **characterised in that** a front abutment (316) at the height of the plunger tip (311) bears on the abutment wall (322) at the height of the inner wall (321) if the plunger (31) is located in a rear rest position, so that the front push surface (311) of the plunger (31) comes to lies roughly flush with the one channel inner wall (321).

10. A filling machine (1) according to claim 1, **characterised in that** in the transport device (40) parallel racks (41; 42) are uniformly distanced from a reference straight line (G₂) in a common plane over a contact plate (43), wherein the racks (41, 42) have two degrees of freedom of movement.

11. A filling machine (1) according to claim 10, **characterised in that** retaining profiles (45, 46) may be inserted into the racks (41, 42) and are detachably fastenable, and comprise recesses (47, 48) which serve for the positive-fit and/or non-positive fit retention of the containers to be transported.

12. A filling machine according to claim 1, **characterised in that** the working heads of the working stations (21, 26, 27) are aligned over the transport device along the reference straight line (G₂).

13. A transport method for containers to be filled, wherein in a first step a container (G) is pushed from a retaining position (P₁) in a knee region of a separating device (30) of a filling machine (1) according to one of the claims 2, 3, 4, 10 or 11 along a straight line (G₃) into a position (P₂) in the starting region of the transport device (40), wherein the transport racks (41, 42) are located in an opened position so that the position (P₂) is released.

14. A method according to claim 13, **characterised in that** each transport step advances the container by a defined path (ΔT) along the straight line (G₃).

15. A method according to claim 13, **characterised in that** each transport step comprises four cycles, wherein
in a first cycle (1/4) the transport racks are moved towards one another until they rigidly hold the containers to be transported,
in a second cycle (2/4) the racks with the containers are displaced laterally in the transport direction by the defined path (ΔT)
in a third cycle (3/4) the transport racks are moved apart until they completely release the container, and
in a fourth step (4/4) the racks are travelled back into the starting position without containers.

16. A method according to claim 15, **characterised in that** the transport steps are cycled synchronously with the separating steps.

## Revendications

1. Machine pour remplissage (1) avec au moins un dispositif de séparation (30) et au moins un dispositif de transport (40) linéaire destinée au transport (40) de récipients à remplir (G), ces récipients étant réglables sur différents diamètres de récipient de façon progressive, **caractérisée par le fait que** le dispositif de séparation (30) comprend 2 parois de passage en forme de L (31, 32) et un moyen pour les rapprocher et les éloigner, de sorte qu'il est réglable de façon progressive sur différents diamètres de récipient.

2. Machine pour remplissage selon la revendication 1, **caractérisée par le fait que** les parois de passage opposées (32, 33), qui forment un passage pour les récipients à séparer dans le dispositif de séparation (30), et les râteaux de transport opposés (41, 42) du dispositif de transport (40) peuvent être rapprochés ou éloignés de façon synchrone par rapport à une ligne droite de référence (G₂).

3. Machine pour remplissage selon la revendication 2, **caractérisée par le fait que** les parois de passage opposées (32, 33) du canal en forme de L peuvent être rapprochées ou éloignées de façon uniforme le long d'une ligne droite (G₃), auquel cas la ligne droite (G₃) de la bissectrice à travers l'angle en forme de L du passage correspond au dispositif (30), de sorte que la largeur du passage dans les deux côtés latéraux du dispositif de séparation (30) en forme de L est identique.

4. Machine pour remplissage selon la revendication 3, **caractérisée par le fait que** l'angle en forme de L est d'approximativement 90°.

5. Machine pour remplissage avec un dispositif de séparation (30) selon la revendication 1, **caractérisée par le fait qu'**un poussoir (31) peut être bougé en avant et en retour le long d'une ligne droite de référence (G₂) autour d'une distance (ΔP) et, avec le poussoir, un récipient à séparer peut être emmené d'une position (P1) se trouvant dans le secteur coudé du dispositif de séparation (30) dans une position (P2) se trouvant dans le secteur initial du dispositif de transport (30).

6. Machine pour remplissage selon la revendication 5, **caractérisée par le fait qu'**une surface de poussée (311) antérieure du poussoir (31) vient se situer approximative dans un plan avec une paroi intérieure de passage (321) dans une position de repos postérieure du poussoir (31).

7. Machine pour remplissage selon la revendication 6, **caractérisée par le fait qu'**une position de départ postérieure et une position terminale antérieure du mouvement du poussoir sont définies par l'action conjointe d'un dispositif de blocage postérieur (317) et d'un dispositif de blocage antérieur (316) avec une paroi du dispositif de blocage (322), auquel cas la paroi du dispositif de blocage (322) s'étend en direction de la paroi intérieure du passage (321) et est solidement reliée à la paroi du passage (32).

8. Machine pour remplissage (1) selon la revendication 7, **caractérisée par le fait que** la distance entre le dispositif de blocage postérieur (317) et le dispositif de blocage antérieur (316) correspond à la distance (AP) du poussoir (31).

9. Machine pour remplissage (1) selon la revendication 7, **caractérisée par le fait que** un dispositif de blocage antérieur (316) à la hauteur de l'extrémité du poussoir (311) s'appuie à la paroi du dispositif de blocage (322) à la hauteur de la paroi intérieure (321), si le poussoir se trouve dans une position de repos postérieure, de sorte que la surface de poussée (311) antérieure du poussoir (31) vient se situer approximativement à fleur avec cette paroi intérieure du passage (321).

10. Machine pour remplissage (1) selon la revendication 1, **caractérisée par le fait que**, des râteaux parallèles (41; 42) sont montés dans le dispositif de transport (40), ces râteaux parallèles (41 ; 42) étant distanciés, de manière uniforme, par rapport à une ligne droite de référence (G₂) dans un plan commun au-dessus d'une plaque de métal de support (43), auquel cas les rateaux (41, 42) présent deux degrés de liberté du mouvement.

11. Machine pour remplissage (1) selon la revendication 10, **caractérisée par le fait que** des profils d'arrêt (45, 46) sont insérables et fixables de façon amovible dans les râteaux (41, 42) et ils présentent des creux (47, 48) qui servent au maintien par serrage de forme et/ou par adhérence des récipients à transporter.

12. Machine pour remplissage (1) selon la revendication 1, **caractérisée par le fait que** les têtes de travail des postes de travail (21, 26, 27) sont alignées sur le dispositif de transport le long de la ligne droite de référence (G₂).

13. Procédé de transport pour des récipients à remplir, auquel cas, dans une première étape, un récipient (G) est poussé d'une position d'arrêt (P1), dans un secteur coudé d'un dispositif de séparation (30) d'une machine pour remplissage (1), le long d'une ligne droite (G₃) dans une position (P₂), dans le secteur de départ du dispositif de transport (40), selon une des revendications 2, 3, 4, 10 ou 11, auquel cas les râteaux de transport (41, 42) se trouvent dans une position ouverte, de sorte que la position (P₂) est relâchée.

14. Procédé selon la revendication 13, **caractérisé par le fait que** chaque étape de transport déplace les récipients autour d'une distance définie (ΔT) le long de la ligne droite (G₃).

15. Procédé selon la revendication 13, **caractérisé par le fait que** chaque étape de transport comprend quatre phases, auquel cas
dans une première phase (1/4), les râteaux de transport sont rapprochés les uns vers les autres, jusqu'à ce qu'ils retiennent fermement les récipients à transporter,
dans une deuxième phase (2/4), les râteaux avec les récipients sont déplacés latéralement dans la direction de transport autour de la distance définie (ΔT),
dans une troisième phase (3/4), les râteaux de transport sont éloignés les uns des autres jusqu'à ce qu'ils libèrent complètement les récipients et
dans une quatrième phase (4/4), les râteaux sans récipients reviennent dans la position de départ.

16. Procédé selon la revendication 15, **caractérisée par le fait que** les phases de transport sont synchronisées avec les étapes de séparation.
